# EUROPÄISCHE PATENTSCHRIFT

(11) **EP 0 535 454 B1**
(45) Veröffentlichungstag und Bekanntmachung des Hinweises auf die Patenterteilung: **23.10.1996**
(21) Anmeldenummer: 92115891.1
(22) Anmeldetag: 17.09.1992
(51) Int. Cl.: B29C 65/20

(54) **Einrichtung zum Verschweissen von Kunststoffteilen**
Apparatus for welding plastic parts
Appareil pour le soudage d'éléments en matière plastique

(30) Priorität: 04.10.1991 CH 2935/91
(43) Veröffentlichungstag der Anmeldung: 07.04.1993
(73) Patentinhaber: Georg Fischer Rohrleitungssysteme AG, CH-8201 Schaffhausen (CH)
(72) Erfinder: Stehle, Richard, W-7703 Rielasingen-Worblingen (DE); Wermelinger, Jörg, CH-8200 Schaffhausen (DE)

(56) Entgegenhaltungen:
- EP-A- 0 167 870
- EP-A- 0 196 795
- EP-A- 0 453 903
- DE-A- 2 249 317
- DE-A- 3 240 202
- DE-U- 9 012 841
- FR-A- 2 381 612
- GB-A- 2 124 316
- JP-A- 2 107 429
- US-A- 3 013 925
- US-A- 5 013 376
- PLASTVERARBEITER Bd. 36, Nr. 10, Oktober 1985, SPEYER/RHEIN DE Seiten 86 - 94 H. POTENTE , J. KREITER 'Rechnersteuerung beim Heizelement-stumpschweissen'
- KUNSTSTOF EN RUBBER Bd. 43, Nr. 10, Oktober 1990, ROTTERDAM NL Seiten 59 - 61 J.D.C. MEIJERINK 'Het stuiklassen van buizen en fittingen'
- GUMMI, FASERN, KUNSTSTOFFE. INTERNATIONALE FACHZEITSCHRIFT FUR DIE POLYMER-VERARBEITUNG Bd. 39, Nr. 3, März 1986, STUTTGART DE U. BEERSTECHER 'Werkstoffe und Geräte zur Verarbeitung von Polymerwerkstoffen'
- KUNSTSTOFFE Bd. 70, Nr. 4, 1980, MUNCHEN DE Seiten 193 - 196 H. POTENTE 'Stand und Entwicklungstendenzen der stoffschlüssigen Kunststoff-Fügetechniken'

## Beschreibung

Die Erfindung betrifft eine Einrichtung zum Verschweissen von Kunststoffteilen, wie sie im Oberbegriff von Anspruch 1 beschrieben ist.

Durch die EP-A2-0167870 ist eine Einrichtung der eingangs genannten Art bekanntgeworden, welche als in der Hand zu haltendes Gerät ausgebildet und nur für kleine Rohrdurchmesser geeignet ist. Eine fehlerfreie Bedienung zur Erzielung einwandfreier Schweissungen ist mit dieser Einrichtung kaum zu erreichen, da die entsprechenden Steuer- und Kontrollorgane sowie eine integrierte Rohrenden-Bearbeitung fehlen.

Im weiteren ist durch die DE-B2-2212055 eine Einrichtungen zum Verschweissen bekanntgeworden, bei welchen die Aufheizung der zu verschweissenden Flächen durch direkten Kontakt mit dem Heizelement erfolgt. Nachteilig ist hierbei die mögliche Verschmutzung der Heizflächen an dem Heizelement. Zum Andrücken der Werkstückflächen an die Heizflächen sind druck- und wegabhängige Steuerungen für die Schlittenbewegungen erforderlich. Zur Erreichung von Qualitäts-Schweissungen sind sehr aufwendige Steuer-Einrichtungen für einen automatischen Arbeitsablauf erforderlich.

Aufgabe der vorliegenden Erfindung ist die Schaffung einer Einrichtung der eingangs genannten Art, mittels welcher trotz Handbedienung und ohne aufwendige automatische Steuerungen einwandfreie Schweissverbindungen hergestellt werden können und mittels welcher Fehlbedienungen weitgehendst ausgeschlossen sind.

Erfindungsgemäss wird diese Aufgabe durch die kennzeichnenden Merkmale von Anspruch 1 gelöst.

Weitere vorteilhafte Ausgestaltungen der Erfindung sind in den abhängigen Ansprüchen beschrieben.

Durch die gespeicherten Bearbeitungs- und Schweissparamter und deren Anzeige mit den Arbeitsschritten an der Anzeigeeinrichtung wird eine problemlose Handbedienung ermöglicht, wobei durch die Kontroll-Einrichtungen ein Soll-Ist-Vergleich stattfindet, sodass eine Fehlbedienung weitgehendst ausgeschlossen wird.

Die Erfindung ist in der beiliegenden Zeichnung vereinfacht dargestellt und nachfolgend beschrieben.

Die einzige Figur zeigt eine schematische Darstellung der Schweisseinrichtung zum stirnseitigen Verschweissen von rohrförmigen Teilen wie z.B. ein Kunststoffrohr 1 mit einem weiteren Kunststoffrohr 2 oder einem Formteil mit einem Blockschaltbild der Steuerung.

Die Einrichtung weist ein Grundgestell 3 auf, auf welchem eine fest angeordnete Spannvorrichtung 4 und eine auf einem Schlitten 6 axial verschiebbare Spannvorrichtung 5 angeordnet ist.

Eine Heizvorrichtung 7 ist an einem Halteteil 8 angeordnet und mittels eines Handgriffes 9 zwischen die Enden der eingespannten rohrförmigen Teile 1, 2 einschwenkbar oder einschiebbar.

Das Halteteil 8 ist auf einer Führung 10 axial in Richtung der feststehenden Spannvorrichtung 4 verschiebbar gelagert.

Die Heizvorrichtung 7 ist als Infrarot-Heizvorrichtung ausgebildet, wobei die stirnseitigen Enden der rohrförmigen Teile 1, 2 berührungslos mittels Wärme- bzw. Infrarot-Strahlen aufgeheizt werden.

Die Heizvorrichtung 7 weist einen Heizkörper 12 auf in welchem mehrere elektrisch heizbare Heizpatronen angeordnet sind. Mindestens ein Thermofühler ist im Heizkörper 12 angeordnet und mit einer Regeleinrichtung in einer Prozess-Steuerung für die Heizvorrichtung 7 wirkverbunden.

Am Heizkörper 12 sind Anschlagnocken 11 angeordnet, welche durch axiales Verschieben der Heizvorrichtung 7 zur Anlage an die Spannvorrichtungen 4, 5 bringbar sind. Durch diese Anschlagnocken 11 ist die Distanz zwischen den Enden der rohrförmigen Teile 1, 2 und der Oberfläche des Heizkörpers 12 festgelegt.

Auf der Führung 10 ist ein Bearbeitungswerkzeug 14 axial verschiebbar und von Hand zwischen die Spannvorrichtung 4, 5 einschwenkbar oder einschiebbar angeordnet, wobei das Bearbeitungswerkzeug 14 motorisch antreibbar ist und Schneiden auf beiden Seiten zur Bearbeitung der stirnseitigen Enden der rohrförmigen Teile 1, 2 aufweist.

An dem Bearbeitungswerkzeug 14 sind ebenfalls Anschlagnocken 13 angeordnet, welche den Weg für die Spanabnahme durch Anlage an den Spannvorrichtungen 4, 5 begrenzen. Das Bearbeitungswerkzeug 14 wird ebenfalls bei der Bearbeitung der Rohrenden mittels der verschiebbaren Spannvorrichtung 5 von Hand so weit axial verschoben, bis die Anschlagnocken 13 an den Spannvorrichtungen 4, 5 anliegen, wodurch die Rohrenden 1, 2 zu den Stirnflächen der Spannvorrichtungen 4, 5 nach die Bearbeitung eine vorgegebene Distanz aufweisen.

Eine am Grundgestell 3 angeordnete Stellschraube 15 bildet mit einem am Schlitten 6 angeordneten Nocken 16 einen einstellbaren Anschlag 17, wobei parallel zum Anschlag 17 eine Wegmesseinrichtung 18 angeordnet ist.

Mit diesem einstellbaren Anschlag wird der Fügeweg, das heisst das Mass auf welches die beiden erwärmten Rohrenden 1, 2 zusammengepresst wird, eingestellt und ist durch die Wegemesseinrichtung 18 messbar bzw. überprüfbar.

Für die Verschiebung des Schlittens 6 mit der Spanneinrichtung 5 ist ein mittels eines Handhebels 25 betätigbarer Kniehebel-Verstellantrieb 26 vorgesehen.

Der Kniehebel-Verstellantrieb 26 weist den Vorteil einer anfänglich schnellen Zustellbewegung und beim Zusammendrücken der zu verschweissenden Teile 1, 2 einer am Ende langsamen Schliessbewegung bis zum Anschlag 17 auf. In Anschlagstellung ist der Schlitten 6 durch eine über den Totpunkt gehende Stellung des Kniehebels 26 selbsttätig gehalten, wobei dies durch eine im Kniehebel-Verstelltrieb 26 angeordnete Feder 27 auch bei baulichen Massungenauigkeiten gewährleistet ist.

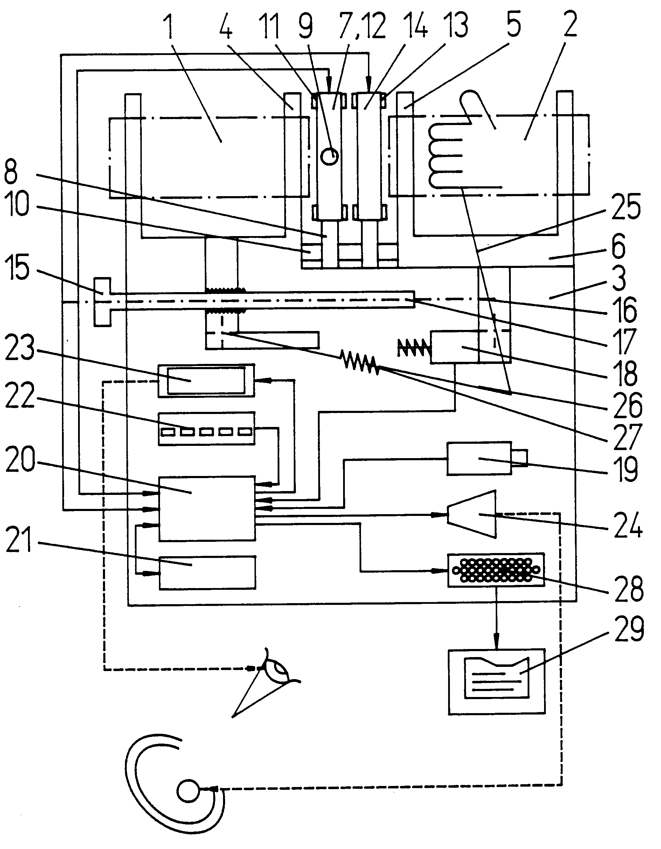

Wie aus dem Blockschaltbild in Fig. 1 ersichtlich, weist die Einrichtung eine Prozess-Steuerung 20 mit einem Daten-Speicher 21 auf. Eine Eingabetastatur 22, eine optische Anzeigeeinrichtung 23, ein akustisches Signalgerät 24, die Heizvorrichtung 7, das Bearbeitungswerkzeug 14, die Wegmesseinrichtung 18 sowie verschiedene Positionsschalter 19 welche z.B. an der Heizvorrichtung und am Bearbeitungswerkzeug angeordnet sind, sind mit der Prozess-Steuerung 20 über Leitungen wirkverbunden. Im Datenspeicher 21 sind abhängig von Rohraussendurchmesser, Wandstärke und Material die Bearbeitungs- und Schweissparameter sowie der Schweissablauf mit den Anweisungen für die Handbedienung fest einprogrammiert.

Die Prozess-Steuerung 20 ist mit einer am Grundgestell 3 angeordnet Anschluss-Schnittstelle 28 für einen Drucker 29 versehen, welcher nach Beendigung der Schweissung ein Schweissprotokoll erstellt.

Im Datenspeicher 21 sind abhängig von verschiedenen eingegebenen Rohrdimensionen und Materalien folgende Daten eingespeichert: Fügeweg, Schweisstemperatur, Aufwärmzeit, Umschaltzeit, und Kühlzeit, wobei diese Daten jeweils an der Anzeigeeinrichtung sichtbar sind.

Der Ablauf des Schweissvorganges erfolgt wie nachfolgend beschrieben:
a.) Eingabe von Hand der Rohrdimensionen (Aussendurchmesser und Wanddicke) sowie des Materials der zu verschweissenden rohrförmigen Teile
b.) Anzeige der Schweissparameter (Temperatur, Aufheizzeit, Umschaltzeit, Kühlzeit)
c.) Anzeige des Soll-Fügeweges
d.) Überprüfung des eingestellten Fügeweges durch Zusammenfahren der beiden Spannvorrichtungen bis zum Anschlag 17, Messung und Anzeige des Ist-Wertes
e.) Einstellung des Soll-Wertes durch Drehen der Stell-Schraube 15
f.) Einspannen der zu verschweissenden rohrförmigen Teile 1, 2 in die Spannvorrichtung 4, 5 wobei deren Stirnflächen an einem weiter nicht dargestellten, z.B. einsteckbaren Anschlag zuliegen kommmen
g.) Bearbeitungswerkzeug einschwenken und durch Betätigung des Handhebels 25 beide Rohrenden plan hobeln bis das Messer nicht mehr schneidet (Anschläge 13 liegen an den Spanneinrichtungen an)
h.) Hobelmass überprüfen durch Zusammenfahren der Rohrenden. Wenn die Anzeige nicht auf 0,00 ± 0,05 ist, muss der Hobelvorgang wiederholt werden.
i.) Wenn die erforderliche Schweisstemperatur am Heizkörper erreicht ist erfolgt Anzeige bereit zum Schweissen
k.) Heizkörper einfahren wobei bei Betätigung eines Positionsschalters 19 die Heizzeit beginnt. Mit dem Hebel 25 die Spannvorrichtung 5 gegen Anschlagnocken 11 verschieben bis die Heizdistanz eingestellt ist.
l.) Nach Ablauf der Heizzeit (Anzeige bei 0), Zurückfahren der Spannvorrichtung 5, Heizvorrichtung 7 zurückschieben und Zusammenfahren der Rohrenden mittels Handhebel 25 bis über den Totpunkt. Beginn Kühlzeit. Diese Bewegungen müssen innerhalb der angezeigten Umschaltzeit (z.B. 3 sec.) erfolgen
m.) Nach Ablauf der Kühlzeit, welche am Anzeigegerät ersichtlich ist, wird am Drucker ein Schweissprotokoll erstellt und die geschweissten Teile können entnommen werden

Die Ist-Daten werden mit den Soll-Daten in der Prozess-Steuerung verglichen und bei unzulässigen Differenzen wird ein Fehlerprotokoll erstellt.

Bei verschiedenen Arbeitsschritten ertönt neben der optischen Anzeige auch ein akustisches Signal.

## Patentansprüche

1. Einrichtung zum Verschweissen von rohrförmigen Teilen und Rohren (1, 2) aus thermoplastischem Kunststoff, welche in koaxialer Lage zueinander mittels Spannvorrichtungen (4, 5) gehalten werden, von denen mindestens eine mittels eines Handhebels (25) in axialer Richtung verschiebbar ist, mit einer, zwischen die Rohrenden bringbaren, Wärmestrahlen erzeugenden Heizvorrichtung (7) zur berührungslosen Aufheizung der Rohrenden, dadurch gekennzeichnet, dass eine Prozesssteuerung (20) einen Datenspeicher (21) für die Speicherung von der Rohrdimension und Material abhängigen Bearbeitungs- und Schweiss-Parameter aufweist, und dass die Prozesssteue-rung (20) mit einer Eingabetastatur (22), einer Anzeige-Einrichtung (23) und mit Kontroll-Einrichtungen (18, 19) wirkverbunden ist, wobei die Einrichtung nach Massgabe der Anzeige-Einrichtung (23) in Reihenfolge der Arbeitsschritte sichtbaren Schweissparameter und Bedienungsanweisungen von Hand bedient wird.

2. Einrichtung nach Anspruch 1, dadurch gekennzeichnet, dass ein zwischen die Rohrenden (1, 2) einbringbares Bearbeitungswerkzeug (14) auf einer Führung (10) angeordnet ist und während der Rohrbearbeitung mittels der verschiebbaren Spannvorrichtung (5) von Hand axial bis zur Anlage an den Spannvorrichtungen (4, 5) verschiebbar ist.

3. Einrichtung nach Anspruch 2, dadurch gekennzeichnet, dass die zwischen die Rohrenden (1, 2) einbringbare Heizvorrichtung (7) auf einer Führung (10) axial verschiebbar angeordnet ist, wobei diese mittels der von Hand verschiebbaren Spannvorrichtung(5) auf eine durch Anschlagnocken (11) bestimmte Distanz zwischen den Enden der zu verschweissenden Teile (1, 2) und der Oberfläche des Heizkörpers (12) bringbar ist.

4. Einrichtung nach Anspruch 2 oder 3, dadurch gekennzeichnet, dass die verschiebbare Spannvorrichtung (5) auf einem Schlitten (6) angeordnet ist, an welchem ein mit einem Handhebel (25) versehener Kniehebel-Verstellantrieb (26) angreift.

5. Einrichtung nach Anspruch 4, dadurch gekennzeichnet, dass der Schlitten beim Verschweissen der rohrförmigen Teile (1, 2) gegen einen Anschlag (17) verschiebbar ist, wobei in der Anschlagsstellung der Schlitten (6) durch eine über den Totpunkt gehende Stellung des Kniehebels (26) selbsttätig gehalten ist.

6. Einrichtung nach Anspruch 5, dadurch gekennzeichnet, dass der Anschlag (17) einstellbar ist und mit einer parallel dazu angeordneten Wegmesseinrichtung (18) versehen ist, wobei die Wegmesseinrichtung (18) über die Prozess-Steuerung (20) mit dem Anzeigegerät (23) wirkverbunden ist.

7. Einrichtung nach einem der Ansprüche 2 bis 6, dadurch gekennzeichnet, dass mit der Prozess-Steuerung (20) ein Drucker (29) für die Erstellung eines Schweiss- oder Fehlerprotokoll wirkverbunden ist.

8. Einrichtung nach einem der Ansprüche 2 bis 7, dadurch gekennzeichnet, dass die Kontroll-Einrichtungen Positions-Schalter (19) für die Stellung der Heizvorrichtung (7) und des Bearbeitungswerkzeuges (14) aufweist.

## Claims

1. Apparatus for welding tubular parts and pipes (1, 2) made from thermoplastic material, which are held in a mutually coaxial position by means of clamping devices (4, 5), of which at least one, is slidable in the axial direction by means of a hand lever (25), with a heating device (7) which can be brought between the pipe ends and producing heat rays for heating them up without contact, characterised in that a process controller (20) has a data store (21) for storing the processing and welding parameters dependent on the pipe dimension and material, and that the process controller (20) is operatively connected to an input keyboard (22), a display (23) and control devices (18, 19) the apparatus being operated manually according to the sequence of welding parameters and operational instructions or the operational steps displayed on the display instrument (23).

2. Apparatus in accordance with claim 1, characterised in that a processing tool (14) insertable between the pipe ends (1, 2) is arranged on a guide (10) and is manually axially slidable by means of the slidable clamping device (5), whilst processing the pipe, up to abutment on the clamping devices (4, 5).

3. Apparatus in accordance with claim 2, characterised in that the heating device (7) insertable between the pipe ends (1, 2) is arranged axially movably on a guide (10), which can be brought by means of the manually slidable clamping device (5) to a position in which the distance between the ends of the parts (1, 2) to be welded and the surface of the heating body (12) is set by the stop lug (11).

4. Apparatus in accordance with claim 3, characterised in that the slidable clamping device (5) is arranged on a sliding carriage (6), which engages a toggle lever adjustment drive (26) provided with a hand lever (25).

5. Apparatus in accordance with claim 4, characterised in that the sliding carriage is slidable during welding of the tubular ports (1, 2) against a stop (17), the sliding carriage (6) being automatically held in the stopping position by positioning the toggle lever (26) beyond the dead centre.

6. Apparatus in accordance with claim 5, characterised in that the stop (17) can be adjusted and is provided with a position sensor (18) arranged parallel to it, the position sensor (18) being operatively connected with the display instrument (23) via the press controller (20).

7. Apparatus in accordance with one of claims 2 to 6, characterised in that a printer (29) is operatively connected with the process controller (20) for providing a welding or error report.

8. Apparatus in accordance with one of claims 2 to 7, characterised in that the control devices have a positioning switch (19) for positioning the heating device (7) and the processing tool (14).

## Revendications

1. Dispositif pour souder des pièces tubulaires et des tubes (1, 2) en matière thermoplastique qui sont maintenus en position coaxiale l'un par rapport à l'autre au moyen de dispositifs de serrage (4, 5), dont au moins un peut coulisser dans la direction axiale au moyen d'un levier manuel (25), comprenant un dispositif de chauffage (7) qui peut être amené entre les extrémités des tubes et produit un rayonnement thermique et qui chauffe sans contact les extrémités des tubes, caractérisé en ce qu'une unité de commande de processus (20) comporte une mémoire de données (21) pour stocker des paramètres d'usinage et de soudage en fonction des dimensions des tubes et du matériau, et en ce que l'unité de commande de processus (20) agit conjointement avec un clavier d'entrée (22), un dispositif d'affichage (23) et des dispositifs de contrôle (18, 19), le dispositif étant utilisé manuellement en fonction du dispositif d'affichage (23), dans l'ordre des étapes de travail et selon les paramètres de soudage visibles et les instructions d'utilisation.

2. Dispositif selon la revendication 1, caractérisé en ce qu'un outil d'usinage (14) pouvant être amené entre les extrémités des tubes (1, 2) est disposé sur un guide (10) et, lors de l'usinage des tubes, peut être déplacé axialement à la main au moyen du dispositif de serrage coulissant (5) jusqu'à ce que les dispositifs de serrage (4, 5) soient en contact.

3. Dispositif selon la revendication 2, caractérisé en ce que le dispositif de chauffage (7) pouvant être amené entre les extrémités des tubes (1, 2) est monté sur un guide (10) avec une possibilité de déplacement axial, ledit dispositif pouvant être déplacé, au moyen du dispositif de serrage (5) à déplacement manuel, à une distance définie par un taquet de butée (11) entre les extrémités des pièces à souder (1, 2) et la surface du corps de chauffe (12).

4. Dispositif selon la revendication 2 ou 3, caractérisé en ce que le dispositif de serrage mobile (5) est monté sur un chariot (6), sur lequel agit une commande de déplacement à genouillère (26) munie d'un levier manuel (25).

5. Dispositif selon la revendication 4, caractérisé en ce que, lors du soudage des pièces tubulaires (1, 2), le chariot peut être amené contre une butée (17), en position appliquée le chariot (6) étant maintenu automatiquement par la genouillère (26) qui dépasse le point mort.

6. Dispositif selon la revendication 5, caractérisé en ce que la butée (17) est réglable et est munie d'un dispositif de mesure de déplacement (18) disposé parallèlement à elle, le dispositif de mesure de déplacement (18) agissant conjointement avec l'appareil d'affichage (23) par l'intermédiaire de l'unité de commande de processus (20).

7. Dispositif selon l'une des revendications 2 à 6, caractérisé en ce qu'une imprimante (29) agit conjointement avec l'unité de commande de processus (20) pour établir un procès-verbal de soudage ou d'erreur.

8. Dispositif selon l'une des revendications 2 à 7, caractérisé en ce que les dispositifs de contrôle comportent des commutateurs de positionnement (19) enregistrant la position du dispositif de chauffage (7) et de l'outil d'usinage (14).
